(19) Europäisches Patentamt European Patent Office Office européen des brevets

(11) **EP 4 711 150 A1**

(12) **EUROPEAN PATENT APPLICATION**

(43) Date of publication:
18.03.2026 Bulletin 2026/12

(21) Application number: 25197187.5

(22) Date of filing: 21.08.2025

(51) International Patent Classification (IPC):
*B60C 1/00* (2006.01)     *B60C 11/00* (2006.01)

(52) Cooperative Patent Classification (CPC):
**B60C 1/0016; B60C 11/005; B60C 11/0058;
B60C 11/0083;** B60C 2011/0025; B60C 2200/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.09.2024 JP 2024158498**

(71) Applicant: **Sumitomo Rubber Industries, Ltd.
Kobe-shi, Hyogo 651-0072 (JP)**

(72) Inventor: **IKAI, Takuma
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **TIRE**

(57)     Provided is a tire comprising a tread part, wherein the tread part is composed of a rubber composition comprising a rubber component, a filler, and a plasticizer, wherein the rubber component comprises a styrene-butadiene rubber, wherein the filler comprises carbon black, wherein the plasticizer comprises a resin component, wherein a radius of curvature R of the tread part on a tire equator is 50 mm or more and 220 mm or less, and wherein Dt, 100°C tan δ, and 100°C E* satisfy the following inequality (1):

$$9.0 \times 100°C\ \tan\ \delta - 1.0 \times 10^3 \times (100°C\ E^*/Dt) > 0\ (1)$$

where Dt represents a tire outer diameter, in mm, 100°C tan δ represents a tan δ at 100°C of the rubber composition, and 100°C E* represents a complex elastic modulus, in MPa, at 100°C of the rubber composition.

EP 4 711 150 A1

**(Cont. next page)**

# FIG. 1

**Description**

TECHNICAL FIELD

The present invention relates to a tire.

BACKGROUND OF THE INVENTION

A tire has been required to have grip performance, such as dry grip performance and the like, in order to secure safety, etc., and various tires have been developed to satisfy this requirement (JP 2019-203073 A).

SUMMARY OF THE INVENTION

Examples of a method of bringing out a high dry grip performance include, for example, a method of increasing a tan $\delta$ peak temperature of a tread rubber. However, if the tan $\delta$ peak temperature is increased too much, the tread rubber becomes a glassy state to harden at an operational temperature of a tire, which may therefore cause slippage or the like during running.
Moreover, in order to improve a lap speed in a circuit tire, it is required to achieve both grip performance and steering stability at high levels on a dry road surface.
It is an object of the present invention to provide a tire that can improve in steering stability.
The present invention relates to a tire comprising a tread part, wherein the tread part is composed of a rubber composition comprising a rubber component, a filler, and a plasticizer, wherein the rubber component comprises a styrene-butadiene rubber, wherein the filler comprises carbon black, wherein the plasticizer comprises a resin component, wherein a radius of curvature R of the tread part on a tire equator is 50 mm or more and 220 mm or less, and wherein Dt, 100°C tan $\delta$, and 100°C E* satisfy the following inequality (1):

$$9.0 \times 100°C \text{ tan } \delta - 1.0 \times 10^3 \times (100°C \text{ E*}/Dt) > 0 \ (1)$$

where Dt represents a tire outer diameter, in mm, 100°C tan $\delta$ represents a tan $\delta$ at 100°C of the rubber composition, and 100°C E* represents a complex elastic modulus, in MPa, at 100°C of the rubber composition:
According to the present invention, provided is a tire that can improve in steering stability.

BRIEF DESCRIPTION OF THE DRAWINGS

FIG. 1 is a meridional cross-sectional view of a tire relating to one embodiment of the present invention.
FIG. 2 is a variation of the tire relating to the present embodiment.
FIG. 3 is an example of a cross-sectional view taken along a plane including a tire rotation axis, showing a state where a tire is in contact with a road surface (in a case where a crown part does not extend outside a ground-contacting surface).
FIG. 4 is an example of a cross-sectional view taken along a plane including a tire rotation axis, showing a state where a tire is in contact with a road surface (in a case where a crown part extends outside a ground-contacting surface).

DETAILED DESCRIPTION

The tire that is one embodiment of the present invention is a tire comprising a tread part, wherein the tread part is composed of a rubber composition comprising a rubber component, a filler, and a plasticizer, wherein the rubber component comprises a styrene-butadiene rubber, wherein the filler comprises carbon black, wherein the plasticizer comprises a resin component, wherein a radius of curvature R of the tread part on a tire equator is 50 mm or more and 220 mm or less, and wherein Dt, 100°C tan $\delta$, and 100°C E* satisfy the following inequality (1):

$$9.0 \times 100°C \text{ tan } \delta - 1.0 \times 10^3 \times (100°C \text{ E*}/Dt) > 0 \ (1)$$

where Dt represents a tire outer diameter, in mm, 100°C tan $\delta$ represents a tan $\delta$ at 100°C of the rubber composition, and 100°C E* represents a complex elastic modulus, in MPa, at 100°C of the rubber composition:
Although it is not intended to be bound by a theory, for example, the following is considered as a mechanism for improving an overall performance of dry grip performance and steering stability, in the tire of the present invention.

(1) By compounding a rubber component comprising a styrene-butadiene rubber, a filler comprising carbon black, and a plasticizer comprising a resin component, heat generation of the tread rubber can be promoted, which is therefore considered to contribute to improvement of dry grip performance.

(2) On the other hand, when the complex elastic modulus of the tread rubber becomes too large, a contact area with a road surface decreases, which may therefore cause a decrease in steering stability. Here, by setting Dt, 100°C tan $\delta$, and 100°C E* to satisfy the above-described inequality (1), heat generation of the tread rubber is promoted, and as 100°C E* increases, the tire outer diameter Dt increases, thereby increasing the contact area with the road surface, which is therefore considered to contribute to improvement of steering stability.

It is considered that, with cooperation of the above-described (1) and (2), a remarkable effect of improving steering stability is achieved.

An acetone extraction amount of the rubber composition is preferably 33% by mass or more from the viewpoint of promoting heat generation of the tread rubber to further improve grip performance.

A content rate of a resin component in a plasticizer is preferably 60% by mass or more from the viewpoint of promoting heat generation of the tread rubber to further improve grip performance.

The resin component preferably comprises a sustainable resin from the viewpoint of environmental load.

A total styrene amount in the rubber component is preferably 40% by mass or more from the viewpoint of promoting heat generation of the tread rubber to further improve grip performance.

The radius of curvature R is preferably 50 mm or more and 200 mm or less. By setting R within the above-described range and reducing a ground-contacting area of the tread part, a pressure applied to the tread part can be increased, and it is considered that heat generation of the tread rubber is promoted.

A total content of fillers based on 100 parts by mass of the rubber component in the rubber composition is preferably 100 parts by mass or more from the viewpoint of promoting heat generation of the tread rubber to further improve grip performance.

100°C tan $\delta$ of the rubber composition is preferably 0.37 or more from the viewpoint of further improving grip performance.

100°C E* of the rubber composition is preferably 2.3 MPa or more from the viewpoint of the effects of the present invention.

The tire relating to the present embodiment is appropriately used as a tire for automated two-wheeled vehicle.

It is preferable that the tread part has a crown part located at a center in a tire width direction and a pair of shoulder parts located on an outer side of the crown part in the tire width direction, and that the shoulder part consists of the above-described rubber composition. By using the rubber composition for the shoulder part of the tread part, it is considered that dry grip performance during cornering can be improved and a turning speed can be improved.

<Definitions>

A "tread part" is a member comprising a part that forms a ground-contacting surface of a tire, and in a case where the tire comprises a member that forms a tire skeleton from steel or a textile material such as a belt layer, a belt reinforcing layer, a carcass, and the like, on a cross section of the tire taken along a plane including a tire rotation axis, a member arranged on an outer side therefrom in a tire radial direction.

A "standardized state" is a state where a tire is rim-assembled on a standardized rim and air under a standardized internal pressure is filled, and no load is applied. Unless otherwise specified, a tire in the standardized state is used.

A "dimension of each part of the tire" is a value specified in a standardized condition for one appearing on the outer surface of the tire, unless otherwise specified, while it is a value specified in a condition where, for example, the tire is cut on a plane including a tire rotation axis and the cut tire piece is held to a rim width of a standardized rim for one present inside the tire or on a tire cutting surface.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity WL in kg" is calculated by the following equations. Wherein "V" is a virtual volume, in mm$^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = [(Dt/2)^2 - (Dt/2 - Ht)^2] \times \pi \times Wt$$

The "crown part" is a part of a tread part, which is located in a center of the tread part, and which reaches an outer side in a tire axial direction with respect to a position within ±5% of a tread width around the tire equator and does not reach a tread edge. However, a portion of an electrically conductive rubber member when provided is excluded.

A "shoulder part" is a part of a tread part, which is located on an outer side of a crown part in a tire axial direction and reaches a tread edge.

A "tread width" is a distance from one tread edge to the other tread edge, which is an outer end in a tire axial direction, on a tread surface which is a part that comes into contact with a road surface, of a tread part.

An "electrically conductive rubber member" is a member embedded in a tread part, a part of which is exposed on a tire ground-contacting surface, in order to effectively release static electricity generated during running of a tire to the ground-contacting surface. It includes a member called as a base pen.

A "rubber component of a rubber composition" is a component that contributes to crosslinking in the rubber composition and generally has a weight-average molecular weight (Mw) of 10,000 or more.

A "sustainable resin" refers to a resin component whose constituent components are made partially or entirely from raw materials derived from natural resources such as biomass and the like or from recycle-derived raw materials.

A "plasticizer" is a material that imparts plasticity to a rubber component, which is a component extracted from a rubber composition using acetone. Moreover, the plasticizer includes a plasticizer that is liquid (in a liquid state) at 25°C and a plasticizer that is solid at 25°C. However, it shall not comprise wax and stearic acid commonly used in the tire industry.

A "content of a plasticizer" also includes an amount of a plasticizer contained in an extended rubber component previously extended with the plasticizer such as oil, a resin component, a liquid rubber component, and the like. The same applies to a content of oil, a content of a resin component, and a content of a liquid rubber, for example, an extending oil is included in the content of oil when an extending component is oil.

<Measuring method>

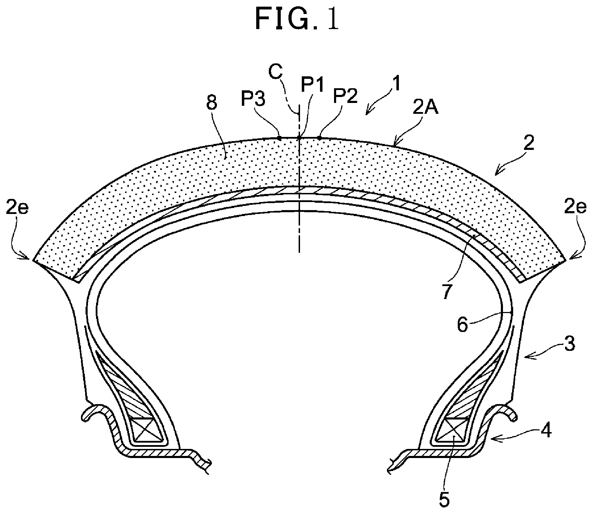

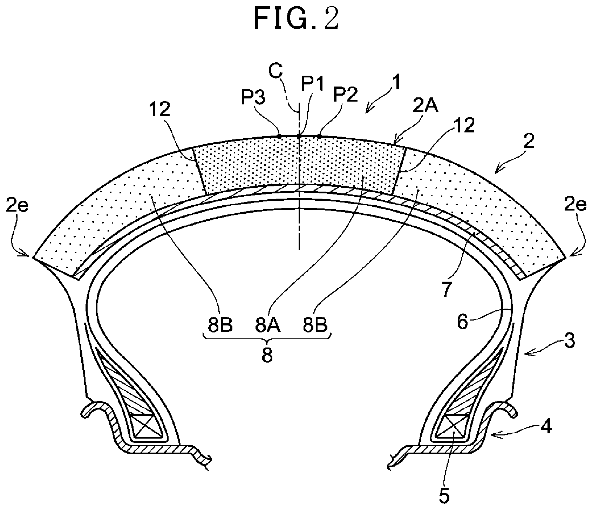

A "radius of curvature R of a tread part on a tire equator" is calculated by a radius of curvature of an arc that passes through three points P1, P2, and P3, where P1 represents an intersection point between a tread surface 2A and a tire equator (tire center line) C on a tire meridian cross section of a tread part, and P2 and P3 represent points on the tread surface 2A spaced apart by a distance of 2.5% of a tread width onto both sides in a tire axial direction around P1 (FIGS. 1 and 2).

An "acetone extraction amount" can be calculated by the following equation after immersing each rubber test piece in acetone for 72 hours to extract a soluble component and measuring masses of each test piece before and after extraction in accordance with JIS K 6229:2015.

(Acetone extraction amount (% by mass)) = {(mass of rubber test piece before extraction - mass of rubber test piece after extraction) / (mass of rubber test piece before extraction)} $\times$ 100.

"100°C tan $\delta$" is a loss tangent measured using a dynamic viscoelasticity measuring device (e.g., EPLEXOR series manufactured by gabo Systemtechnik GmbH), under a condition of a temperature at 100°C, a frequency of 10Hz, an initial strain of 10%, a dynamic strain of $\pm$2%, and an extension mode. A sample for the measurement is a vulcanized rubber composition with 20 mm in length $\times$ 4 mm in width $\times$ 1 mm in thickness. When it is produced by cutting out a tire, it is cut out from a tread part so that a tire circumferential direction becomes a long side and a tire radial direction becomes a thickness direction.

"100°C E*" is a complex elastic modulus measured using a dynamic viscoelasticity measuring device (e.g., EPLEXOR series manufactured by gabo Systemtechnik GmbH), under a condition of a temperature at 100°C, a frequency of 10Hz, an initial strain of 10%, a dynamic strain of $\pm$2%, and an extension mode. A sample for the measurement is produced in the similar manner as in the case for 100°C tan $\delta$.

A "glass transition temperature (Tg) of an SBR" is calculated in accordance with JIS K 6229:2015 after removing an extender oil with acetone and then subjecting a pure SBR content to differential scanning calorimetry (DSC) in accordance with JIS K 7121:2012.

A "styrene content" is calculated by pyrolysis gas chromatography or NMR measurement ($^1$H-NMR or $^{13}$C-NMR). Unlike physical property values such as a complex elastic modulus (E*) and the like, an amount of a component such as the "styrene content" and the like has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component. The styrene content is applied to, for example, a rubber component having a repeating unit derived from styrene such as an SBR and the like (styrene unit).

A "vinyl content (1,2-bond butadiene unit amount)" is calculated by pyrolysis gas chromatography or NMR measurement ($^1$H-NMR or $^{13}$C-NMR). Similarly with the "styrene content", the "vinyl content" has a true value that is independent of a measuring method, so it is preferable to use a measuring method with as high accuracy as possible. The vinyl content is applied to, for example, a rubber component having a repeating unit derived from butadiene such as an SBR, a BR, and the like.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible.

A "total styrene amount in a rubber component" is a total content, in % by mass, of styrene units contained in 100 % by mass of a rubber component, which is a value obtained by multiplying a styrene content, in % by mass, by a mass fraction in a rubber component to obtain a calculated value, for each of respective rubber components, and summing these values. Specifically, it is calculated by $\Sigma$(styrene content (% by mass) of each styrene unit-containing rubber $\times$ content (% by mass) of each styrene unit-containing rubber in rubber component / 100). For example, when the rubber component consists of 20% by mass of a first SBR (styrene content: 25% by mass), 30% by mass of a second SBR (styrene content: 27.5% by mass), and 50% by mass of a BR, a total styrene amount in the rubber component is about 13.3% by mass (= (25$\times$20/100)+(27.5$\times$30/100)+(0$\times$10/100)).

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered trademark) SuperMultiporeHZ-M manufactured by Tosoh Corporation). For example, it is applied to an SBR, a BR, a plasticizer, and the like.

A "nitrogen adsorption specific surface area ($N_2SA$) of carbon black" is measured according to JIS K 6217-2:2017.

A "nitrogen adsorption specific surface area ($N_2SA$) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of {4 $\times$ (area of particle)/$\pi$}) is calculated from the microscope image to be defined as a particle size. The average primary particle size is applied to silica, carbon black, etc.

A "softening point of a resin component" is a temperature at which a sphere drops when the softening point specified in JIS K 6220-1:2015 7.7 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only.

[Tire]

The tire relating to the present embodiment comprises a tread part consisting of a rubber composition described below. The tread part may be a single member, or may be a member consisting of a plurality of parts. When the tread part is a member consisting of a plurality of parts, for example, it consists of a crown part located at a center in a tire axial direction and a pair of shoulder parts located on an outer side of the crown part, but the present invention is not limited to this. When the tread part is a member consisting of a plurality of parts, it is preferable that at least the shoulder part consists of a rubber composition described below.

The tire will be described below as one embodiment of the present invention as appropriate with reference to the drawings. FIG. 1 is one example of a cross-sectional view taken along a plane including a tire rotation axis (also referred to as a "tire axis") of a tire for automated two-wheeled vehicle (However, indication of a groove provided on a tread surface is omitted. The same applies to FIGS. 2, 3, and 4.). The tire 1 comprises a carcass 6 extending from a tread part 2 through a sidewall part 3 to a bead core 5 of a bead part 4, and a belt layer 7 arranged on an outer side of the carcass 6 in a tire radial direction and on an inner side of the tread part 2. On the above-described cross section, a tread surface 2A of the tread part 2 that comes into contact with a road surface is convex and extends in an arc shape with bended outward in the tire radial direction. Moreover, an outer end of the tread surface 2A in the tire axial direction is a tread edge 2e. The tread part 2 may or may not have a groove.

On the tread part 2, a tread rubber 8 is arranged on an outer side of the belt layer 7 in a radial direction. In the present embodiment, the tread rubber 8 occupies a space from an outer surface of the belt layer 7 to the tread surface 2A.

FIG. 2 is a variation of the tire relating to the present embodiment. Regarding the variation, the tire configuration mentioned above may be adopted for parts not described below.

In FIG. 2, the tread rubber 8 is composed of a crown part 8A with a tire equator C centered thereon and a pair of shoulder parts 8B adjacent to the crown part 8A and extending to a tread edge 2e. That is, two types of members, the crown part 8A and the shoulder parts 8B, are arranged side by side from a vicinity of the tire equator C toward both sides in a tire axial direction. Besides, the crown part 8A may be further divided. Moreover, each of the pair of shoulder parts 8B may be further divided.

In FIG. 2, the crown part 8A and the shoulder parts 8B are separated by normal lines 12 made to stand on the tread surface 2A, but a format of separation is not limited, such as, for example, one for which they are separated by a boundary line outwardly or inwardly inclining in the tire axial direction from the tread surface 2A toward the belt layer 7.

The maximum length of a curved line length in a width direction of a surface of a tread part of the crown part 8A is preferably 20% or more, more preferably 25% or more, further preferably 33% or more of a curved line length in a width direction of the entire tread part 2, from the viewpoint of abrasion resistance. Moreover, the curved line length in the width direction of the surface of the tread part of the crown part 8A is preferably 70% or less, more preferably 60% or less, further preferably 55% or less of the curved line length in the width direction of the entire tread part, from the viewpoint of grip performance.

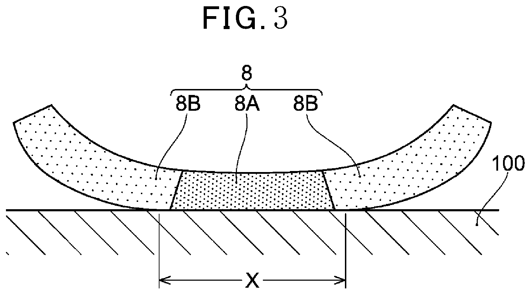

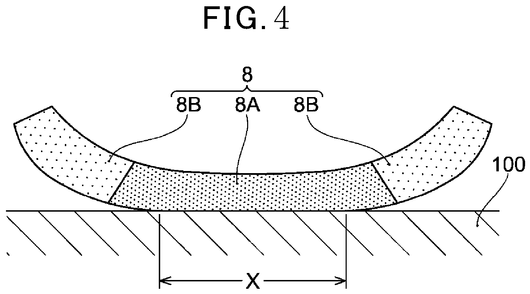

As shown in FIG. 3, a position of separation (a boundary line) between the crown part 8A and the shoulder parts 8B may be inside of a width X of a ground-contacting surface (a part where a tread part 8 comes into contact with a road surface 100 with a standardized internal pressure being applied and a standardized load being applied) or outside thereof (see FIG. 4). The state shown in FIG. 3 is referred to as a state being "inside the ground-contacting surface", and the state shown in FIG. 4 is referred to as a state being "outside the ground-contacting surface". From the viewpoint of preventing a stepped abrasion caused by a difference in abrasion resistance of a tread compounding, the position of separation is preferably outside the width X.

The radius of curvature R of the tread part 2 relating to the present embodiment on the tire equatorial plane is 220 mm or less, preferably 210 mm or less, more preferably 200 mm or less. On the other hand, the radius of curvature R is 50 mm or more, preferably 70 mm or more, more preferably 100 mm or more.

The outer diameter Dt of the tire relating to the present embodiment is preferably 750 mm or less, more preferably 700 mm or less, further preferably 650 mm or less. On the other hand, the outer diameter Dt of the tire is preferably 500 mm or more, more preferably 525 mm or more, further preferably 550 mm or more.

The acetone extraction amount of the rubber composition constituting the tread part is preferably 20% by mass or more, more preferably 25% by mass or more, further preferably 30% by mass or more, further preferably 31% by mass or more, further preferably 32% by mass or more, particularly preferably 33% by mass or more, from the viewpoint of the effects of the present invention. Moreover, it is preferably 55% by mass or less, more preferably 50% by mass or less, further preferably 45% by mass or less, particularly preferably 40% by mass or less, from the viewpoint of durability.

$100°C \tan \delta$ of the rubber composition constituting the tread part is preferably 0.25 or more, more preferably 0.28 or more, further preferably 0.31 or more, further preferably 0.35 or more, further preferably 0.37 or more, particularly preferably 0.40 or more, from the viewpoint of dry grip performance. On the other hand, it is preferably 0.60 or less, more preferably 0.55 or less, further preferably 0.50 or less, from the viewpoint of durability.

In the present embodiment, 100°C tan $\delta$ is an indication relating to heat generation of a rubber composition when running on a dry road surface. 100°C tan $\delta$ can be appropriately adjusted depending on types or contents of a rubber component, a filler, a plasticizer, a vulcanizing agent, a vulcanization accelerator, and the like, which will be described below. For example, it tends to be increased by increasing a content of a filler (carbon black, silica, etc.) or a plasticizer.

100°C E* of the rubber composition constituting the tread part is preferably 1.0 MPa or more, more preferably 1.2 MPa or more, further preferably 1.5 MPa or more, particularly preferably 1.7 MPa or more, from the viewpoint of exerting a restoring force against deformation to improve responsiveness. On the other hand, it is preferably 3.0 MPa or less, more preferably 2.7 MPa or less, further preferably 2.5 MPa or less, particularly preferably 2.3 MPa or less, from the viewpoint of improving heat generation due to deformation of a tread part. Besides, 100°C E* of the rubber composition can be appropriately adjusted depending on types and contents of a rubber component, a plasticizer, etc.

100°C tan $\delta$/100°C E* is preferably 0.18 or more, more preferably 0.19 or more, further preferably 0.20 or more, particularly preferably 0.21 or more, from the viewpoint of the effects of the present invention. On the other hand, an upper limit value of the value of 100°C tan $\delta$/100°C E*i is, but not particularly limited to, preferably 0.40 or less, more preferably 0.35 or less, further preferably 0.30 or less, particularly preferably 0.27 or less.

In the tire relating to the present embodiment, Dt, 100°C tan $\delta$, and 100°C E* described above satisfy the following inequality (1):

$$9.0 \times 100°C \tan \delta - 1.0 \times 10^3 \times (100°C\ E*/Dt) > 0 \quad (1)$$

Dt, 100°C tan $\delta$, and 100°C E* described above preferably satisfy the following inequality (2):

$$9.0 \times 100°C \tan \delta - 1.0 \times 10^3 \times (100°C\ E*/Dt) \geq 0.50 \quad (2)$$

In the present embodiment, the value of $9.0 \times 100°C \tan \delta - 1.0 \times 10^3 \times (100°C\ E*/Dt)$ is greater than 0, preferably 0.05 or more, more preferably 0.10 or more, further preferably 0.20 or more, further preferably 0.30 or more, further preferably 0.40 or more, further preferably 0.50 or more, particularly preferably 0.60 or more. On the other hand, an upper limit value of the value of $9.0 \times 100°C \tan \delta - 1.0 \times 10^3 \times (100°C\ E*/Dt)$ is, but not particularly limited to, preferably 2.00 or less, more preferably 1.80 or less, further preferably 1.60 or less, further preferably 1.40 or less, particularly preferably 1.20 or less.

[Rubber composition]

The rubber composition constituting the tread part relating to the present embodiment (hereinafter referred to as the rubber composition relating to the present embodiment) comprises a rubber component comprising a styrene-butadiene rubber, a filler comprising carbon black, and a plasticizer comprising a resin component, any of which can be produced using raw materials described below according to a tan $\delta$ peak temperature, 100°C tan $\delta$, 100°C E*, an acetone extraction amount, etc., to be requested. The rubber composition relating to the present embodiment will be described below.

<Rubber component>

The rubber component relating to the present embodiment comprises a styrene-butadiene rubber (SBR) as an essential component, and further, diene-based rubbers other than an SBR, such as a butadiene rubber (BR) and the like, can also be appropriately used. Moreover, the rubber component may be one consisting of an SBR.

Examples of diene-based rubbers other than an SBR include, for example, an isoprene-based rubber, a butadiene rubber (BR), a styrene-isoprene rubber (SIR), a styrene-isoprene-butadiene rubber (SIBR), a chloroprene rubber (CR), an acrylonitrile-butadiene rubber (NBR), and the like. Moreover, these diene-based rubbers may be modified rubbers treated with modifying groups capable of interacting with fillers such as carbon black, silica, and the like, or may be hydrogenated rubbers obtained by hydrogenating a part of an unsaturated bond. The diene-based rubber may be used alone, or two or more thereof may be used in combination. Moreover, as the diene-based rubber, an extended rubber which has been previously extended with a plasticizer which will be mentioned later may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

(SBR)

An SBR is not particularly limited, examples of which include an unmodified solution-polymerized SBR (S-SBR) and an emulsion-polymerized SBR (E-SBR), modified SBRs (a modified S-SBR, a modified E-SBR) thereof, and the like. Examples of the modified SBR include an SBR modified at its terminal and/or main chain with a compound having the following functional group (a modifying agent), a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

As an SBR, an oil-extended SBR can be used, or a non-oil-extended SBR can be used. An extending oil amount of an SBR, i.e., a content of an extending oil contained in the SBR when used is preferably 10 to 50 parts by mass based on 100 parts by mass of a rubber solid content of the SBR.

Example of SBRs that can be used in the present embodiment include, for example, those commercially available from JSR Corporation, Sumitomo Chemical Co., Ltd., UBE Corporation, Asahi Kasei Corporation, ZS Elastomer Co., Ltd., ARLANXEO, etc.

A styrene content of an SBR is preferably 20% by mass or more, more preferably 25% by mass or more, further preferably 30% by mass or more, further preferably 35% by mass or more, particularly preferably 40% by mass or more, from the viewpoint of the effects of the present invention. On the other hand, the styrene content of the SBR is preferably 60% by mass or less, more preferably 55% by mass or less, further preferably 50% by mass or less. Besides, the styrene content of the SBR is measured by the above-described measuring method.

A vinyl content of an SBR is preferably 10 mol% or more, more preferably 20 mol% or more, further preferably 30 mol% or more, from the viewpoint of the effects of the present invention. Moreover, a vinyl bond amount of an SBR is preferably 80 mol% or less, more preferably 70 mol% or less, further preferably 60 mol% or less. Besides, the vinyl content of the SBR is measured by the above-described measuring method.

A glass transition point (Tg) of an SBR is preferably -50°C or higher, more preferably -40°C or higher, further preferably -30°C or higher, from the viewpoint of the effects of the present invention. Moreover, the Tg of the SBR is preferably lower than 10°C, more preferably lower than 5°C, further preferably lower than 0°C. Besides, the Tg of the SBR is measured by the above-described measuring method.

A weight-average molecular weight (Mw) of an SBR is preferably 200,000 or more, more preferably 250,000 or more, further preferably 300,000 or more, from the viewpoint of grip performance. Moreover, the Mw of the SBR is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of an SBR in the rubber component is preferably 40% by mass or more, more preferably 50% by mass or more, further preferably 60% by mass or more, particularly preferably 70% by mass or more, from the viewpoint of the effects of the present invention. On the other hand, an upper limit value of the content is not particularly limited.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. The BR may be used alone, or two or more thereof may be used in combination.

As the high cis BR, for example, those commercially available from Zeon Corporation, UBE Corporation, JSR Corporation, etc. can be used. When the high cis BR is compounded, low temperature characteristics and abrasion resistance can be improved. A cis content of the high-cis BR is preferably greater than 95 mol%, more preferably greater than 96 mol%, further preferably greater than 97 mol%. Besides, the cis content of the BR is measured by the above-described measuring method.

A weight-average molecular weight (Mw) of a BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the Mw of the BR is measured by the above-described measuring method.

A content of a BR in the rubber component is preferably 50% by mass or less, more preferably 40% by mass or less, further preferably 30% by mass or less, further preferably 25% by mass or less, particularly preferably 20% by mass or less, from the viewpoint of the effects of the present invention. Moreover, a lower limit value of the content can be, but not particularly limited to, for example, 1% by mass or more, 3% by mass or more, 5% by mass or more, or 10% by mass or more.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. The isoprene-based rubber may be used alone, or two or more thereof may be used in combination.

An NR is not particularly limited, and those common in the tire industry can be used, examples of which include, for example, SIR20, RSS#3, TSR20, and the like.

A content of an isoprene-based rubber in the rubber component is preferably less than 30% by mass, more preferably less than 20% by mass, further preferably less than 10% by mass, particularly preferably less than 5% by mass, from the viewpoint of the effects of the present invention. Moreover, a lower limit value of the content is not particularly limited.

A total styrene amount in the rubber component is preferably 20% by mass or more, more preferably 25% by mass or more, further preferably 30% by mass or more, further preferably 35% by mass or more, particularly preferably 40% by mass or more, from the viewpoint of heat generation. Moreover, the total styrene amount in the rubber component is preferably 55% by mass or less, more preferably 52% by mass or less, further preferably 48% by mass or less.

(Other rubber components)

The rubber component may comprise rubber components other than diene-based rubbers (non-diene-based rubbers) as long as they do not affect the effects of the present invention. As the non-diene-based rubbers, rubber components commonly used in the tire industry can be used, examples of which include, for example, a butyl-based rubber, an ethylene-propylene rubber, a polynorbornene rubber, a silicone rubber, a polyethylene chloride rubber, a fluorine rubber (FKM), an acrylic rubber (ACM), a hydrin rubber, and the like. Other rubber components may be used alone, or two or more thereof may be used in combination. Moreover, besides the above-described rubber components, the rubber component may or may not comprise a known thermoplastic elastomer.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC, often not being equal to 100 under a normal condition currently, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

<Filler>

The rubber composition relating to the present embodiment comprises a filler. The filler comprises carbon black as an essential component, and may further comprise other fillers such as silica and the like. Moreover, the filler may be a filler consisting only of carbon black or a filler consisting only of carbon black and silica.

(Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. Carbon black may be used alone, or two or more thereof may be used in combination.

Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.

In the present specification, a "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LD Carbon, etc. can be used.

A nitrogen adsorption specific surface area ($N_2SA$) of carbon black is preferably greater than 80 $m^2/g$, more preferably greater than 90 $m^2/g$, further preferably greater than 100 $m^2/g$, particularly preferably greater than 110 $m^2/g$, from the viewpoint of reinforcing property. Moreover, it is preferably less than 250 $m^2/g$, more preferably less than 220 $m^2/g$, further preferably less than 190 $m^2/g$, from the viewpoints of heat generation and processability. Besides, the $N_2SA$ of carbon black is measured by the above-described measuring method.

A content of carbon black based on 100 parts by mass of the rubber component is preferably 1 part by mass or more, more preferably 5 parts by mass or more, further preferably 10 parts by mass or more, further preferably 20 parts by mass or more, further preferably 30 parts by mass or more, particularly preferably 50 parts by mass or more, from the viewpoint of reinforcing property. Moreover, it is preferably 150 parts by mass or less, more preferably 140 parts by mass or less, further preferably 130 parts by mass or less, particularly preferably 120 parts by mass or less, from the viewpoint of suppressing heat generation.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. Silica may be used alone, or two or more thereof may be used in combination.

As silica relating to the present embodiment, silica made from a biomass material is appropriately used, from the viewpoint of building a sustainable society. Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably 110 $m^2/g$ or more, more preferably 130 $m^2/g$ or more, further preferably 150 $m^2/g$ or more, particularly preferably 170 $m^2/g$ or more, from the viewpoints of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica is measured by the above-described measuring method.

An average primary particle size of silica is preferably 24 nm or less, more preferably 22 nm or less, further preferably 20 nm or less, particularly preferably 18 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content of silica when compounded based on 100 parts by mass of the rubber component is preferably 30 parts by mass or more, more preferably 50 parts by mass or more, further preferably 70 parts by mass or more, from the viewpoint of the effects of the present invention. Moreover, the content is preferably 150 parts by mass or less, more preferably 140 parts by mass or less, further preferably 130 parts by mass or less, particularly preferably 120 parts by mass or less.

(Other fillers)

Fillers other than silica and carbon black are not particularly limited, and, for example, those commonly used in the tire industry can be compounded such as aluminum hydroxide, alumina (aluminum oxide), calcium carbonate, magnesium sulfate, talc, clay, biochar (BIOCHAR), and the like. These other fillers may be used alone, or two or more thereof may be used in combination.

A total content of fillers based on 100 parts by mass of the rubber component is preferably 50 parts by mass or more, more preferably 70 parts by mass or more, further preferably 90 parts by mass or more, particularly preferably 100 parts by mass or more, from the viewpoint of the effects of the present invention. Moreover, it is preferably 150 parts by mass or less, more preferably 140 parts by mass or less, further preferably 130 parts by mass or less, from the viewpoints of fuel efficiency and elongation at break.

(Silane coupling agent)

Silica is preferably used in combination with a silane coupling agent. The silane coupling agent is not particularly limited, and any silane coupling agent used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. The silane coupling agent may be used alone, or two or more thereof may be used in combination.

A content of a silane coupling agent based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<Plasticizer>

The rubber composition relating to the present embodiment comprises a plasticizer. The plasticizer comprises a resin component as an essential component, and may further comprise another resin component such as oil and the like.

In the present specification, a "plasticizer" is a material that imparts plasticity to the rubber component, and has a concept that includes both a plasticizer in liquid (in a liquid state) at 25°C and a plasticizer that is solid at 25°C. Examples of the plasticizer include, a resin component, oil, a liquid rubber, an ester-based plasticizer, and the like. These plasticizers may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizers. The plasticizer may be used alone, or two or more thereof may be used in combination.

(Resin component)

The rubber composition relating to the present embodiment may comprise a resin component in combination. A resin component that can be used in the present embodiment is not particularly limited, and any resin commonly used in the tire industry can be used, examples of which include, for example, an adhesive resin such as a terpene-based resin, a rosin-based resin, a dicyclopentadiene-based resin, an aromatic vinyl-based resin, a C9-based resin, a C5-based resin, a C5/C9-based resin, a phenol-based resin, and the like. These resin components may be used alone, or two or more thereof may be used in combination. Each resin component may also be used alone, respectively, or two or more thereof may be used in combination.

In the present embodiment, a sustainable resin is appropriately used as a resin component. In the present specification, the "sustainable resin" refers to a resin component whose constituent components are made partially or entirely from raw materials derived from natural resources such as biomass and the like or from recycle-derived raw materials. That is, the sustainable resin comprises raw materials derived from natural resources or recycle-derived raw materials as constituent components. Moreover, the sustainable resin may further comprise usual petroleum-derived raw materials. Examples of a resin component comprising raw materials derived from natural resources include, for example, a terpene-based resin, a rosin-based resin, an aromatic vinyl-based resin derived from a biomass naphtha, and the like. Examples of a resin component comprising recycle-derived raw materials include, for example, a C5-based resin derived from a pyrolysis oil of a tire, and the like. Among them, as the sustainable resin, one or more resins selected from the group consisting of a terpene-based resin and a rosin-based resin are preferable.

A "terpene-based resin" refers to a resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. As the terpene compound serving as the monomer component of the terpene-based resin, a terpene compound derived from natural resources can be used. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

A "rosin-based resin" refers to resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin acid compound, a rosin acid compound derived from natural resources can be used. As the rosin-based resin, for example, those commercially available from Harima Chemicals Group, Inc., Arakawa Chemical Industries, Ltd., IREC Co., Ltd., etc. can be used.

A "dicyclopentadiene-based resin" refers to resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

An "aromatic vinyl-based resin" refers to resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

A "C9-based resin" refers to resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

A "C5-based resin" refers to resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

A "C5/C9-based resin" refers to resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

A "phenol-based resin" refers to resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

The resin component may be a resin component comprising raw materials derived from natural resources such as biomass and the like. The natural resource is not particularly limited, examples of which include, for example, sugar, wood, a plant residue after acquisition of a useful component, a plant-derived ethanol, a biomass naphtha, and the like. Besides, whether a raw material of a resin component is derived from biomass can be determined by pMC (percent Modern Carbon) measured according to ASTM D6866-10.

Examples of the resin component comprising raw materials derived from natural resources include, but not particularly limited to, an adhesive resin such as a terpene-based resin, a rosin-based resin, a dicyclopentadiene-based resin, an aromatic vinyl resin, a C9-based resin, a C5-based resin, a C5/C9-based resin, a phenol-based resin, and the like, etc. Specific examples of the resin component include, for example, an aromatic vinyl-based resin derived from a biomass naphtha, and the like. Moreover, as the terpene compound constituting the terpene-based resin and the rosin acid compound constituting the rosin-based resin, natural-derived ones can be used.

Examples of the resin component comprising the recycle-derived raw materials include, but not particularly limited to, an adhesive resin such as a terpene-based resin, a rosin-based resin, a dicyclopentadiene-based resin, an aromatic vinyl resin, a C9-based resin, a C5-based resin, a C5/C9-based resin, a phenol-based resin, and the like, etc. Specific examples of the resin component include, for example, a C5-based resin derived from a pyrolysis oil of a tire, and the like.

A softening point of a resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

A content of a resin component based on 100 parts by mass of the rubber component (a total amount of all of a plurality of resin components when used in combination) is preferably 30 parts by mass or more, more preferably 40 parts by mass or more, further preferably 50 parts by mass or more, further preferably 55 parts by mass or more, further preferably 60 parts by mass or more, further preferably 65 parts by mass or more, particularly preferably 70 parts by mass or more, from the viewpoint of the effects of the present invention. On the other hand, the content is preferably 130 parts by mass or less, more preferably 120 parts by mass or less, further preferably 110 parts by mass or less, particularly preferably 100 parts by mass or less, from the viewpoint of suppressing heat generation.

(Oil)

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition comprising triacylglycerol is immersed at 25°C for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of ±0.10 ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, a whale oil, or an oleyl alcohol that may be derived therefrom, etc.

A content of oil when compounded based on 100 parts by mass of the rubber component is preferably 20 parts by mass or more, more preferably 30 parts by mass or more, further preferably 35 parts by mass or more, particularly preferably 40 parts by mass or more. Moreover, the content is preferably 100 parts by mass or less, more preferably 90 parts by mass or less, further preferably 80 parts by mass or less, particularly preferably 70 parts by mass or less.

(Liquid rubber)

A liquid rubber is not particularly limited as long as it is a polymer in a liquid state at 25°C, examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. The liquid rubber may be used alone, or two or more thereof may be used in combination.

A content of a liquid rubber when compounded based on 100 parts by mass of the rubber component is preferably 1 part by mass or more, more preferably 3 parts by mass or more, further preferably 5 parts by mass or more. Moreover, the content is preferably 50 parts by mass or less, more preferably 40 parts by mass or less, further preferably 30 parts by mass or less.

(Ester-based plasticizer)

Examples of the ester-based plasticizer include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizer may be used alone, or two or more thereof may be used in combination.

A content of a plasticizer based on 100 parts by mass of the rubber component (a total amount of all of a plurality of plasticizers when used in combination) is preferably 80 parts by mass or more, more preferably 90 parts by mass or more, further preferably 100 parts by mass or more, further preferably 105 parts by mass or more, particularly preferably 110 parts by mass or more, from the viewpoint of the effects of the present invention. Moreover, the content is preferably 160 parts by mass or less, more preferably 150 parts by mass or less, further preferably 140 parts by mass or less, particularly preferably 130 parts by mass or less.

A content rate of a resin component in a plasticizer is preferably 40% by mass or more, more preferably 50% by mass or more, further preferably 55% by mass or more, particularly preferably 60% by mass or more, from the viewpoint of the effects of the present invention. Moreover, the content rate is preferably 85% by mass or less, more preferably 80% by mass or less, further preferably 75% by mass or less.

<Other compounding agents>

The rubber composition relating to the present embodiment can appropriately comprise compounding agents conventionally and commonly used in the tire industry, for example, a vulcanized rubber particle, processing aid, wax, an antioxidant, stearic acid, zinc oxide, a vulcanizing agent, a vulcanization accelerator, and the like, in addition to rubber components, fillers, and plasticizers.

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle may be used alone, or two or more thereof may be used in combination.

The vulcanized rubber particle is not particularly limited and may be a non-modified vulcanized rubber particle or a modified vulcanized rubber particle. As commercially available products of vulcanized rubbers, for example, products from Lehigh Technologies, Muraoka Rubber Reclaiming Co., Ltd., etc. can be used.

A content of a vulcanized rubber particle when compounded based on 100 parts by mass of the rubber component can be appropriately adjusted, for example, within a range of greater than 1 part by mass and less than 80 parts by mass.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. Processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, particularly preferably 0.7 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of a vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used. The vulcanizing agent may be used alone, or two or more thereof may be used in combination.

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. The vulcanization accelerator may be used alone, or two or more thereof may be used in combination. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable.

A content of a vulcanization accelerator when compounded based on 100 parts by mass of the rubber component is preferably 0.5 parts by mass or more, more preferably 0.7 parts by mass or more, further preferably 1.0 parts by mass or more, from the viewpoint of securing a sufficient vulcanization rate. Moreover, the content of the vulcanization accelerator is preferably 10 parts by mass or less, more preferably 5.0 parts by mass or less, from the viewpoint of suppressing blooming.

In the present specification, various materials comprising carbon atoms (for example, a rubber, oil, a resin component, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Production of rubber composition and tire]

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like. The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire relating to the present embodiment, which comprises a tread part composed of the above-described rubber composition, can be produced by a usual method using corresponding rubber compositions, respectively. That is, an unvulcanized rubber composition corresponding to the tread part obtained by the above-described method is extruded into a shape of a tread part with an extruder equipped with a mouthpiece having a predetermined shape, which is then attached together with other tire members on a tire molding machine to be molded by a usual method, thereby forming an unvulcanized tire. This unvulcanized tire is heated and pressurized in a vulcanizer, whereby a tire relating to the present embodiment can be produced. A vulcanization condition is not particularly limited. Examples of vulcanization include, for example, a method of vulcanizing at 150 to 200°C for 10 to 30 minutes.

[Application of tire]

The tire relating to the present embodiment can be used as a tire for a passenger car, a heavy-duty tire, a tire for a large SUV, a tire for automated two-wheeled vehicle, or the like, and is preferably used as a tire for automated two-wheeled vehicle. A type of the tire when used as a tire for automated two-wheeled vehicle is not particularly limited, and it may be either a pneumatic tire or a solid tire, but it is preferably used as a pneumatic tire. Moreover, it can be used for any of various applications of such as an on-road tire, an off-road tire, a racing tire, and the like.

EXAMPLES

Examples considered to be preferable in implementation (Examples) are shown below, though the scope of the present invention is not limited to Examples. Considering a tire comprising a tread part obtained according to the compounding in Table 1 using various chemicals shown below, results, which are calculated based on the following evaluation methods, are shown in Table 1.

Various chemicals used in Examples and Comparative examples are collectively shown below.

SBR1: SE-6529 manufactured by Sumitomo Chemical Co., Ltd. (unmodified S-SBR, styrene content: 43% by mass, vinyl content: 57 mol%, Tg: -4°C, Mw: 1,200,000, comprising 44 parts by mass of an extending oil content based on 100 parts by mass of a rubber solid content)

SBR2: Tufdene 4850 manufactured by Asahi Kasei Corporation (unmodified S-SBR, styrene content: 40% by mass, vinyl content: 46 mol%, Tg: -25°C, Mw: 350,000, comprising 50 parts by mass of an extending oil content based on 100 parts by mass of a rubber solid content)

BR: UBEPOL BR (Registered Trademark) 150B manufactured by UBE Corporation (cis content: 97 mol%, Mw: 440,000)

Carbon black: Show Black N110 manufactured by Cabot Japan K.K. ($N_2SA$: 142 $m^2/g$)

Silica: Ultrasil VN3 manufactured by Evonik Industries AG ($N_2SA$: 175 $m^2/g$, average primary particle size: 18 nm)

Silane coupling agent: Si69 manufactured by Evonik Industries AG (bis(3-triethoxysilylpropyl)tetrasulfide)

Resin component 1: Koresin manufactured by BASF (p-t-butylphenol acetylene resin, softening point: 145°C)

Resin component 2: YS resin PX1150N manufactured by Yasuhara Chemical Co., Ltd. (non-hydrogenated polyterpene resin, softening point: 115°C)

Wax: OZOACE 0355 manufactured by Nippon Seiro Co., Ltd (paraffin wax)

Antioxidant: Antigen 6C manufactured by Sumitomo Chemical Co., Ltd. (N-(1,3-dimethylbutyl)-N'-phenyl-p-phenylenediamine)

Stearic acid: Bead stearic acid "CAMELLIA" manufactured by NOF CORPORATION

Zinc oxide: Ginrei R manufactured by Toho Zinc Co., Ltd.

Sulfur: HK-200-5 manufactured by Hosoi Chemical Industry Co., Ltd. (5% oil-containing powdered sulfur)

Vulcanization accelerator: Nocceler NS-G manufactured by Ouchi Shinko Chemical Industry Co., Ltd. (N-tert-butyl-2-benzothiazolylsulfenamide (TBBS))

(Examples and Comparative examples)

According to the compounding formulations shown in Table 1, using a 1.7 L closed Banbury mixer, all chemicals other than sulfur and vulcanization accelerators are kneaded until reaching a discharge temperature at 150°C to 160°C for 1 to 10 minutes to obtain a kneaded product. Next, using a twin-screw open roll, sulfur and vulcanization accelerators are added to the kneaded product, and the mixture is kneaded for 4 minutes until the temperature reaches 105°C to obtain an unvulcanized rubber composition. The unvulcanized rubber composition is used to be molded into a shape of a tread part, which is then attached together with other tire members, preparing an unvulcanized tire, and the unvulcanized tire is vulcanized at 170°C to obtain each test tire described in Table 1. Besides, each test tire has a basic structure in FIG. 1, with a size of the front tire being 120/70ZR17 and a size of the rear tire being 180/55ZR17, and a radius of curvature R of the tread part on a tire equator being 200 mm. The "left side in the inequality (1)" in Table 1 refers to a value of $9.0 \times 100°C \tan \delta - 1.0 \times 10^3 \times (100°C\ E^*/Dt)$.

<Measurement of acetone extraction amount>

An acetone extraction amount is calculated by the following equation after immersing each rubber test piece, which is produced by being cut out from a tread part of each test tire, in acetone for 72 hours to extract a soluble component and measuring masses of each rubber test piece before and after extraction, in accordance with JIS K 6229:2015.

(Acetone extraction amount (% by mass)) = {(mass of rubber test piece before extraction - mass of rubber test piece after extraction) / (mass of rubber test piece before extraction)} $\times$ 100.

<Measurement of 100°C tan $\delta$ and 100°C E*>

For each vulcanized rubber test piece prepared by cutting out a tread part of each test tire into a size of 20 mm in length $\times$ 4 mm in width $\times$ 1 mm in thickness so that a tire circumferential direction becomes a long side and a tire radial direction becomes a thickness direction, using a dynamic viscoelasticity measuring device (EPLEXOR series manufactured by gabo Systemtechnik GmbH), a loss tangent tan $\delta$ and a complex elastic modulus E* are measured under a condition of a temperature at 100°C, a frequency of 10 Hz, an initial strain of 10%, a dynamic strain of $\pm2\%$, and an extension mode.

<Steering stability>

Each test tire is incorporated into a standardized rim and mounted to a rear wheel of a test vehicle (a large automated two-wheeled vehicle with a displacement of 1000 cc) under a condition of an internal pressure of 200 kPa. Test drivers perform a sensory evaluation of a change in handling characteristics during running with the test vehicle on a test course having a dry asphalt road surface at 120 km/h. The evaluation is performed with integer values of 1 (sensing a significant change) to 5 (sensing little change) stages to calculate a total score by 20 test drivers. A total score of the reference Comparative example (Comparative example 1) is converted into a reference value (100), and an evaluation result for each test tire is indicated as an index in proportion to the total score. The results show that the larger the numerical value is, the better the steering stability is.

Table 1

| | | | Example | | | | | | | | Comparative example | | |
|---|---|---|---|---|---|---|---|---|---|---|---|---|---|
| | 1 | 2 | 3 | 4 | 5 | 6 | 7 | 8 | 9 | 1 | 2 | 3 |
| Compounding amount (parts by mass) | | | | | | | | | | | | |
| SBR1 (Oil content) | 144 (44) | 144 (44) | 144 (44) | 144 (44) | 144 (44) | 144 (44) | - | 86,4 (26.4) | 144 (44) | 144 (44) | 144 (44) | 144 (44) |
| SBR2 (Oil content) | - | - | - | - | - | - | 150 (50) | - | - | - | - | - |
| BR | - | - | - | - | - | - | - | 40 | - | - | - | - |
| Carbon black | 112 | 112 | 102 | 112 | 112 | 112 | 112 | 112 | 22 | 112 | 95 | 112 |
| Silica | - | - | - | - | - | - | - | - | 100 | - | - | - |
| Silane coupling agent | - | - | - | - | - | - | - | - | 8 | - | - | - |
| Oil | 10 | 10 | 10 | 20 | - | - | 10 | - | - | 10 | - | 10 |
| Resin component 1 | 50 | 50 | 50 | 50 | 70 | - | 50 | 90 | 90 | 50 | 40 | 50 |
| Resin component 2 | - | - | - | - | - | 85 | - | - | - | - | - | - |
| Wax | 2.0 | 2.0 | 2.0 | 2.0 | 2.0 | 2.0 | 2.0 | 2.0 | 2.0 | 2.0 | 2.0 | 2.0 |
| Antioxidant | 1.5 | 1.5 | 1.5 | 1.5 | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 | 1.5 | 1.5 | 1.5 | 1.5 |
| Zinc oxide | 1.5 | 1.5 | 1.5 | 1.5 | 1.5 | 1.5 | 1.5 | 1.5 | 1.5 | 1.5 | 1.5 | 1.5 |
| Sulfur | 1.2 | 1.2 | 1.2 | 1.2 | 1.2 | 1.2 | 1.2 | 1.2 | 1.2 | 1.2 | 1.2 | 1.2 |
| Vulcanization accelerator | 1.2 | 1.2 | 1.2 | 1.2 | 1.2 | 1.2 | 1.2 | 1.2 | 1.2 | 1.2 | 1.2 | 1.2 |
| Total styrene amount (% by mass) | 43 | 43 | 43 | 43 | 43 | 43 | 40 | 26 | 43 | 43 | 43 | 43 |
| Acetone extraction amount (% by mass) | 32 | 32 | 33 | 34 | 34 | 37 | 33 | 38 | 37 | 31 | 29 | 32 |

| | | | Example | | | | | | | | Comparative example | | |
|---|---|---|---|---|---|---|---|---|---|---|---|---|---|
| | 1 | 2 | 3 | 4 | 5 | 6 | 7 | 8 | 9 | 1 | 2 | 3 |
| Content of resin component in plasticizer (% by mass) | 48 | 48 | 48 | 44 | 61 | 66 | 45 | 71 | 67 | 48 | 48 | 48 |
| 100°C tan $\delta$ | 0.42 | 0.42 | 0.39 | 0.41 | 0.46 | 0.40 | 0.41 | 0.48 | 0.38 | 0.44 | 0.35 | 0.42 |
| 100°C E* (MPa) | 2.2 | 2.2 | 1.8 | 1.9 | 1.9 | 1.6 | 1.7 | 2.3 | 1.8 | 2.6 | 2.4 | 2.2 |
| Tire outer diameter Dt (mm) | 600 | 650 | 600 | 600 | 600 | 600 | 600 | 600 | 600 | 600 | 600 | 500 |
| Left side in inequality (1) | 0.07 | 0.36 | 0.53 | 0.63 | 0.95 | 1.02 | 0.94 | 0.49 | 0.39 | -0.35 | -0.86 | -0.67 |

(continued)

| | Example | | | | | | | | Comparative example | | | |
|---|---|---|---|---|---|---|---|---|---|---|---|---|
| | 1 | 2 | 3 | 4 | 5 | 6 | 7 | 8 | 9 | 1 | 2 | 3 |
| Steering stability | 104 | 108 | 112 | 114 | 120 | 124 | 118 | 110 | 108 | 100 | 90 | 92 |

REFERENCE SIGNS LIST

1. Tire
2. Tread part
2A. Tread surface
2e. Tread edge
3. Sidewall part
4. Bead part
5. Bead core
6. Carcass
7. Belt layer
8. Tread rubber
8A. Crown part
8B. Shoulder part
100. Road surface
C. Tire equator (Tire center line)
X. Width of ground-contacting surface

**Claims**

1. A tire comprising a tread part,

   wherein the tread part is composed of a rubber composition comprising a rubber component, a filler, and a plasticizer,
   wherein the rubber component comprises a styrene-butadiene rubber,
   wherein the filler comprises carbon black,
   wherein the plasticizer comprises a resin component,
   wherein a radius of curvature R of the tread part on a tire equator is 50 mm or more and 220 mm or less, and
   wherein Dt, 100°C tan $\delta$, and 100°C E* satisfy the following inequality (1):

$$9.0 \times 100°C\ tan\ \delta - 1.0 \times 10^3 \times (100°C\ E*/Dt) > 0\ (1)$$

   where Dt represents a tire outer diameter, in mm, 100°C tan $\delta$ represents a tan $\delta$ at 100°C of the rubber composition, and 100°C E* represents a complex elastic modulus, in MPa, at 100°C of the rubber composition:

2. The tire of claim 1, wherein Dt, 100°C tan $\delta$, and 100°C E* satisfy the following inequality (2):

$$9.0 \times 100°C\ tan\ \delta - 1.0 \times 10^3 \times (100°C\ E*/Dt) \geq 0.50\ (2)$$

3. The tire of claim 1 or 2, wherein an acetone extraction amount of the rubber composition is 33% by mass or more.

4. The tire of any one of claims 1 to 3, wherein a content rate of the resin component in the plasticizer is 60% by mass or more.

5. The tire of any one of claims 1 to 4, wherein the resin component comprises a sustainable resin.

**6.** The tire of any one of claims 1 to 5, wherein a total styrene amount in the rubber component is 40% by mass or more.

**7.** The tire of any one of claims 1 to 6, wherein the radius of curvature R is 50 mm or more and 200 mm or less.

**8.** The tire of any one of claims 1 to 7, wherein a total content of fillers based on 100 parts by mass of the rubber component in the rubber composition is 100 parts by mass or more.

**9.** The tire of any one of claims 1 to 8, wherein 100°C tan $\delta$ is 0.37 or more, preferably 0.40 or more and 0.60 or less.

**10.** The tire of any one of claims 1 to 9, wherein 100°C E* is 2.3 MPa or less, preferably 1.0 MPa or more and 2.3 MPa or less.

**11.** The tire of any one of claims 1 to 10, wherein the tire is a tire for automated two-wheeled vehicle.

**12.** The tire of claim 11,

wherein the tread part has a crown part located at a center in a tire width direction and a pair of shoulder parts located on an outer side of the crown part in the tire width direction, and
wherein the shoulder part consists of the rubber composition.

EP 4 711 150 A1

# FIG. 1

24

# FIG. 2

FIG.3

# FIG. 4

## EUROPEAN SEARCH REPORT

Application Number

EP 25 19 7187

### DOCUMENTS CONSIDERED TO BE RELEVANT

| Category | Citation of document with indication, where appropriate, of relevant passages | Relevant to claim |
|---|---|---|
| A | EP 4 059 737 A1 (SUMITOMO RUBBER IND [JP]) 21 September 2022 (2022-09-21) * claims 1-15; figures 1,2; tables 1-4 * ----- | 1-12 |
| A | EP 3 915 807 A1 (SUMITOMO RUBBER IND [JP]) 1 December 2021 (2021-12-01) * claims 1-11; figures 1-3; table 1 * ----- | 1-12 |
| A | US 2018/312016 A1 (ICHIRYU YUTAKA [JP] ET AL) 1 November 2018 (2018-11-01) * claims 1-6; figures 1,2; table 1 * ----- | 1-12 |

**CLASSIFICATION OF THE APPLICATION (IPC)**

INV.
B60C1/00
B60C11/00

**TECHNICAL FIELDS SEARCHED (IPC)**

B60C

The present search report has been drawn up for all claims

| Place of search | Date of completion of the search | Examiner |
|---|---|---|
| Munich | 18 December 2025 | Carneiro, Joaquim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 7187

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2025

| Patent document cited in search report | | Publication date | Patent family member(s) | | Publication date |
|---|---|---|---|---|---|
| EP 4059737 | A1 | 21-09-2022 | EP | 4059737 A1 | 21-09-2022 |
| | | | JP | 7647207 B2 | 18-03-2025 |
| | | | JP | 2022143984 A | 03-10-2022 |
| EP 3915807 | A1 | 01-12-2021 | EP | 3915807 A1 | 01-12-2021 |
| | | | JP | 7497618 B2 | 11-06-2024 |
| | | | JP | 2021187265 A | 13-12-2021 |
| US 2018312016 | A1 | 01-11-2018 | EP | 3398794 A1 | 07-11-2018 |
| | | | JP | 6946720 B2 | 06-10-2021 |
| | | | JP | 2018187993 A | 29-11-2018 |
| | | | US | 2018312016 A1 | 01-11-2018 |

EPO FORM P0459

For more details about this annex : see Official Journal of the European Patent Office, No. 12/82

**REFERENCES CITED IN THE DESCRIPTION**

**Patent documents cited in the description**

- JP 2019203073 A
- EP 3427975 A
- JP 6856781 B
- EP 3173251 A
- JP 2009002594 A

**Non-patent literature cited in the description**

- *Rubber Chemistry and Technology*, 2012, vol. 85 (3), 408-449
- A comparison of surface morphology and chemistry of pyrolytic carbon blacks with commercial carbon blacks. *Powder Technology*, 2005, vol. 160, 190-193
- *Akita Prefectural University Web Journal B*, 2019, vol. 6, 216-222